# EUROPÄISCHE PATENTANMELDUNG

(11) **EP 3 021 006 A2**
(43) Veröffentlichungstag der Anmeldung: **18.05.2016**
(21) Anmeldenummer: 15193166.4
(22) Anmeldetag: 05.11.2015
(51) Int. Cl.: F16H 55/08

(54) **KEGELRAD ODER HYPOIDRAD MIT KONISCHER ZAHNFORM IN LÄNGSRICHTUNG UND MIT KONSTANTER ZAHNLÜCKENWEITE IM GRUND**

(30) Priorität: 12.11.2014 DE 202014105422 U
(71) Anmelder: Klingelnberg AG, 8050 Zürich (CH)
(72) Erfinder: Müller, Hartmuth, 42857 Remscheid (DE); Hünecke, Carsten, 31840 Hessisch Oldendorf (DE)
(74) Vertreter: Heusch, Christian

(57) **Zusammenfassung**

Kegel- oder Hypoidrad (10) mit einer Spiralverzahnung, die mindestens eine Zahnlücke (11) aufweist, wobei
-die Zahnlücke (11) durch Zahnflanken (12.1, 12.2) begrenzt ist,
-jede der Zahnflanken (12.1, 12.2) eine Flankenlängslinie in Form einer Epizykloide aufweist, und
-die Zahnlücke (11) eine Zahnlückengrundweite hat, die konstant ist.

## Beschreibung

### Gebiet der Erfindung

Gegenstand der Erfindung sind spiralverzahnte Kegel- und Hypoidräder.

### Hintergrund der Erfindung, Stand der Technik

Es gibt verschiedene Typen von Kegel- und Hypoidrädern.

Spiralverzahnte Kegelräder und spiralverzahnte Hypoidräder werden mit Fräs- oder Schleifverfahren hergestellt. Beim Fräsen werden sogenannte Messerköpfe und beim Schleifen sogenannte Topfschleifscheiben verwendet. Hierbei sind verschiedenste Verfahren bekannt, die entweder einzelteilend (durch Schleifen oder Fräsen) oder kontinuierlich teilend (nur Fräsen) sind.

Kreisbogenverzahnte Kegelräder werden zum Beispiel im Einzelteilverfahren (auch intermittierendes Teilverfahren und im Englischen intermitted indexing process oder im Falle von Spiralkegelrädern face milling genannt) gefertigt. Beim Einzelteilverfahren vollziehen die Messer eines Messerkopfs eine kreisförmige Bewegung während der eine Lücke des zu erzeugenden Kegelrades gefertigt wird. Zum Fertigen weiterer Zahnlücken wird der Messerkopf zurückgezogen und das Werkstück um einen Teilungswinkel gedreht (Teilungsdrehung genannt). Dann wird die nächste Lücke entsprechend gefertigt. Es wird somit immer eine Zahnlücke auf einmal gefertigt.

Durch das Fräsen mit einem Messerkopf können im Einzelteilverfahren Kegelräder mit veränderlicher Zahnhöhe, d.h. die Höhe des Zahnes verändert sich kontinuierlich entlang der Zahnbreite, oder mit konstanter Zahnhöhe hergestellt werden. Hierbei ist die veränderliche Zahnhöhe die üblichere Zahnform. Die entstehende Flankenlinie auf dem sogenannten Planrad ist dabei ein Kreisbogen.

Epizykloidisch verzahnte Kegelräder werden hingegen kontinuierlich teilend, d.h. durch ein kontinuierliches Teilverfahren (im Englischen continuous indexing process oder im Falle von Spiralkegelrädern face hobbing genannt) gefertigt. Bei diesem kontinuierlichen Teilverfahren drehen sich sowohl der Messerkopf als auch das Werkstück gekoppelt in einem zeitlich aufeinander abgestimmten Bewegungsablauf. Die Teilung erfolgt also kontinuierlich und Zahnlücken und die entsprechenden Zähne werden quasi gleichzeitig erzeugt.

Wird eine Verzahnung im kontinuierlich teilenden Verfahren gefräst, so ist die Flankenlinie der epizykloidisch verzahnten Kegelräder eine Epizykloide. So können auch verlängerte oder verkürzte epizykloidische Flankenlinien erzeugt werden. Bei den derzeitig angewandten kontinuierlich teilenden Verfahren werden die Zähne immer mit konstanter Zahnhöhe ausgeführt.

Aus dem gewählten Verfahren ergeben sich somit die jeweiligen die Geometrie bestimmenden Größen der gefertigten Kegel- oder Hypoidräder. Diese Größen sind beispielsweise der Verlauf der Flankenlängslinie, der Verlauf der Zahnhöhe entlang der Zahnbreite, die Größe von Kopfkegelwinkel und Fußkegelwinkel sowie auch die Zahnlückengrundweite und deren Verlauf.

Kegel- und Hypoidräder mit konstanter Zahnhöhe und einem Kreisbogen oder einer Epizykloide als Flankenlängslinienform, haben im Allgemeinen einen konischen Zahnlückengrund, d.h. die Zahnlückengrundweite ist veränderlich.

Bei Kegelrädern mit veränderlicher Zahnhöhe ist die Zahnlücke im allgemeinen Fall auch konisch.

Werden jedoch der Fußkegelwinkel und der Kopfkegelwinkel entsprechend angepasst (sogenannte Duplexkegel, siehe ISO 10 300; die Formel, die dort angegeben ist gilt nur für Einzelteilverfahren), so ist die Zahnlückengrundweite im Normalschnitt konstant. Das hat den Vorteil, dass die Zahnlücken eines solchen Kegelrades in einem Schnitt mit einer Maschineneinstellung für die konkaven und konvexen Flanken gefertigt werden können. Dieses Verfahren wird auch Completing genannt. Die erforderlichen Fußkegelwinkel sind dabei beispielsweise vom gewählten mittleren Spiralwinkel und vom Werkzeugradius abhängig. Es kann dabei über die gesamte Zahnbreite die maximal mögliche Zahnfußrundung erzeugt werden. Die Zahnfußrundung wird durch den Abrundungsradius des Werkzeuges mitbestimmt. Ist die Zahnlücke nun konisch, so richtet sich die Größe der Kopfbreite des Werkzeuges und somit auch dieses Abrundungsradius am Werkzeug nach der schmalsten Lücke.

Zusammenfassend kann gesagt werden, dass Kegelräder mit kreisbogenförmiger Flankenlängslinie (auf dem Planrad) meist mit veränderlicher Zahnhöhe und konischer oder konstanter Zahnlücke ausgeführt werden, während Kegelräder mit epizykloidischer Flankenlängslinie (am Planrad), wie sie bei kontinuierlichen Verfahren entsteht, mit konstanter Zahnhöhe und konischer Zahnlücke ausgeführt werden.

Weitere Möglichkeiten sind die Fertigung im Freiformfräsen mittels eines Kugel- oder Fingerfräsers oder mit einem kegelstumpfförmigen Wälzfräser. Bei letzterem Verfahren wird eine Verzahnung mit Evolvente als Flankenlängslinie und mit konstanter Zahnhöhe erzeugt.

Aufgabe der vorliegenden Erfindung ist es, Kegelräder und Hypoidräder bereit zu stellen, die einfach bzw. effizient zu produzieren sind und die möglichst tragfähig sein sollen.

Gemäss Erfindung geht es um Kegelräder und um Hypoidräder mit einer Spiralverzahnung.

Entsprechende Kegelräder und Hypoidräder der Erfindung zeichnen sich durch die Merkmale des Patentanspruchs 1 aus.

Gemäß Erfindung werden der Fußkegelwinkel und Kopfkegelwinkel so gewählt oder ermittelt, dass die Zahnlückengrundweite im Normalschnitt und somit der Abstand der Epizykloiden im Lückengrund im Normalschnitt von konkaver und konvexer Flanke konstant ist. Diese Aussage gilt auch für verlängerte und verkürzte Epizykloiden.

Gemäß Erfindung werden die Vorteile der epizykloidischen Flankenlängslinie (d.h. die Herstellbarkeit im kontinuierlichen Verfahren) mit den Vorteilen einer konstanten Lückweite verbunden. Die konstante Lückweite ermöglicht es einen maximalen Zahnfußradius auszubilden.

Bei dem Fräsen mit einem Messerkopf hängt die Form der Epizykloide bei sonst gleichen Kegelradgeometrieparametern von dem Messerkopfradius und der Messerkopfgangzahl des Messerkopfs ab. Das bedeutet, dass gemäß Erfindung der Fußkegelwinkel und der Kopfkegelwinkel in Abhängigkeit von dem Messerkopfradius und der Messerkopfgangzahl bestimmt werden können. Oder es kann bei vorgegebenem Kegelwinkel der erforderliche Messerkopfradius des Messerkopfs bestimmt werden.

Es ist ein Vorteil der Kegel- und Hypoidräder der Erfindung, dass sie relativ stabil sind. Die Zähne brechen bei Zahnrädern häufig am Zahnfuß aus. Die Zahnfußtragfähigkeit ist gemäß Erfindung höher, da eine größere Zahnfußausrundung möglich ist.

Weitere bevorzugte Ausführungsformen sind den jeweiligen Unteransprüchen zu entnehmen.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt eine schematische Ansicht zweier Zähne und einer Zahnlücke eines spiralverzahnten Kegel- oder Hypoidrads der Erfindung, wobei die Zahnlücke künstlich durch das Aneinanderreihen einer grossen Anzahl von Normalschnitten ermittelt wurde;
- **FIG. 2**: zeigt eine Perspektivansicht eines Kegel- oder Hypoidritzels der Erfindung;
- **FIG. 3**: zeigt eine Perspektivansicht eines Kegel- oder Hypoidtellerrads der Erfindung;
- **FIG. 4A**: zeigt einen schematischen Normalschnitt durch das erzeugende Planrad bei einer 20%igen Zahnbreite;
- **FIG. 4B**: zeigt einen schematischen Normalschnitt durch das erzeugende Planrad bei einer 50%igen Zahnbreite;
- **FIG. 4C**: zeigt einen schematischen Normalschnitt durch das erzeugende Planrad bei einer 80%igen Zahnbreite;
- **FIG. 5A**: zeigt einen schematischen Stirnschnitt durch eine erzeugte Zahnlücke eines Ritzels der Erfindung bei einer 20%igen Zahnbreite;
- **FIG. 5B**: zeigt einen schematischen Stirnschnitt des Ritzels der Fig. 5A bei einer 50%igen Zahnbreite;
- **FIG. 5C**: zeigt einen schematischen Stirnschnitt des Ritzels der Fig. 5A bei einer 80%igen Zahnbreite.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Es geht hier um Kegel- und Hypoidräder 10 mit einer Spiralverzahnung. Der Einfachheit halber ist im Folgenden teilweise nur von Zahnrädern 10 die Rede.

Als Hypoidräder werden im Sinne der Erfindung Kegelräder bezeichnet, die zum Einbau in einem Getriebe mit Achsversatz ausgelegt sind. Das Hypoidrad ist eine Form des Spiralkegelrads. Die Ritzel- und Tellerradachsen von Hypoidrädern 10 laufen nicht in einem Punkt zusammen. Die Achsen schneiden sich nicht wie bei Kegelrädern, sondern sie kreuzen sich bei Hypoidrädern.

Eine Spiralverzahnung ist eine Verzahnung, bei der die Flankenlängslinie einen gekrümmten Verlauf hat. Vorzugsweise ist der Krümmungsradius der Flankenlängslinie kleiner ist als die 20-fache Zahnbreite, d.h. deren Krümmung ist entsprechend gross.

Die Zahnbreite ist als Abschnitt der Teilkegel-Mantellinie zwischen der äusseren und der inneren Endfläche der Zähne des Kegelrads 10 definiert.

Für ein geradverzahntes Kegelrad ist der Stirnschnitt gleich dem Normalschnitt. Da es hier jedoch um Kegel- und Hypoidräder 10 mit einer Spiralverzahnung geht, unterscheiden sich auch die Stirnschnitte von den Normalschnitten.

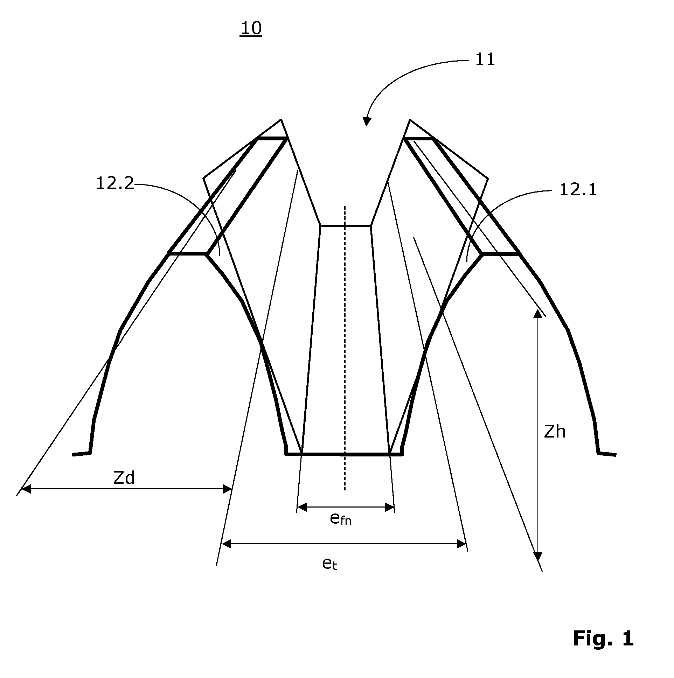

In Fig. 1 ist eine schematische Darstellung einer Verzahnung eines Kegelrades 10 gezeigt, die rechts und links einer Zahnlücke 11 zwei Zähne aufweist. Die Darstellung der Fig. 1 ist aus der ISO23509 Norm abgeleitet. Um die Spiralverzahnung der Erfindung in dieser Form darstellen zu können, wurde die Spiralverzahnung rechnerisch in eine sehr große Anzahl von Normalschnitte zerlegt und diese Normalschnitte wurden im Stile von Stirnschnitten hintereinander gelegt. Die folgenden Begriffe sind entsprechend dieser Norm wie folgt festgelegt: Zahndicke Zd; Zahnhöhe Zh; Zahnlückengrundweite im Zahngrund des Planrads e_{fn}; Zahnlückenweite in der Teilkegelebene et. Der Teilkegel und die Teilkegelebene sind wichtige Bezugsgrößen eines Kegelrades 10. So wird z.B. die Zahndicke Zd auf dem Teilkreis definiert, wie in Fig. 1 zu erkennen ist.

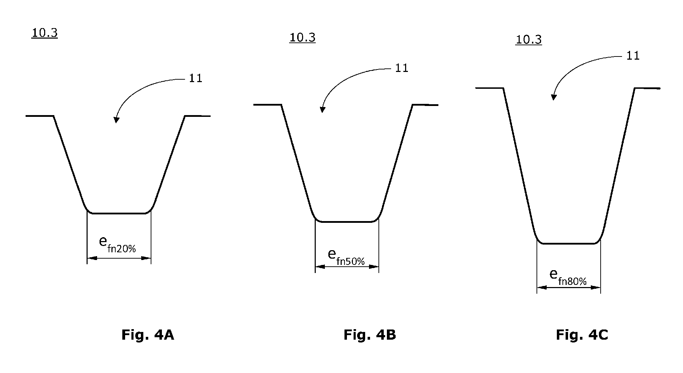

Durch die Flankenlängslinie wird der Verlauf bzw. die Form der Zahnflanken 12.1, 12.2 beschrieben. Bei der vorliegenden Erfindung hat die Flankenlängslinie des entsprechenden erzeugenden Planrades der Kegelradverzahnung die Form einer Epizykloide bzw. sie ist von einer Epizykloide abgeleitet. Die Zahnlücken 11 eines erzeugenden Planrades 10.3 sind in den Figuren 4A bis 4C gezeigt, wobei Fig. 4A eine Zahnlücke 11 bei der 20%igen Zahnbreite, Fig. 4B eine Zahnlücke 11 bei der 50%igen Zahnbreite (d.h. in der Zahnmitte) und Fig. 4C eine Zahnlücke 11 bei der 80%igen Zahnbreite zeigen. Anhand der Figuren 4A bis 4C lässt sich erkennen, dass die Zahnlückengrundweite e_{fn} des Planrads 10.3 im Normalschnitt an jeder Position der Zahnbreite gleich ist. D.h. es gilt: e_{fn20%} = e_{fn50%} = e_{fn80%}.

Das erzeugende Planrad 10.3 ist das Kegelplanrad, das bei der Paarung mit einem Gegenrad anstelle des hier betrachteten Kegelrads 10 treten kann.

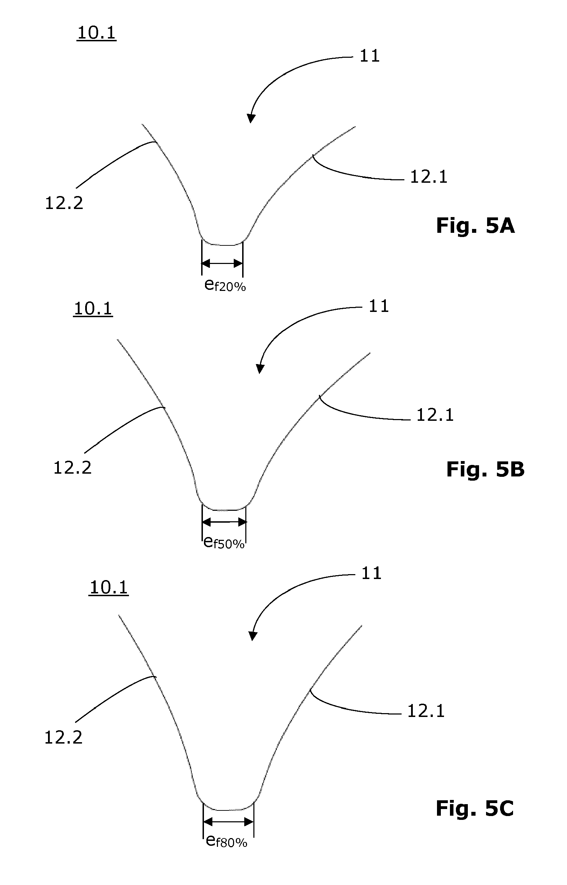

In den Figuren 5A - 5C ist diese Aussage auf die Zahnlücke eines Ritzels 10.1 der Erfindung übertragen worden, wobei es sich hier um Stirnschnitte bei eine 20%igen Zahnbreite, einer 50%igen Zahnbreite (d.h. in der Zahnmitte) und bei einer 80%igen Zahnbreite handelt. Da das Ritzel 10.1 eine Spiralverzahnung aufweist, unterscheiden sich die Stirnschnitte von den Normalschnitten. Im Normalschnitt würde weiterhin gelten, dass die Zahnlückengrundweite e_{fn} konstant ist. D.h. es gilt: e_{fn20%} = e_{fn50%} = e_{fn80%.} Im Stirnschnitt hingegen unterscheiden sich die Zahnlückengrundweiten e_{f}, wie folgt: e_{f20%} < e_{f50%} < e_{f80%}.

Die Flankenlängslinie des entsprechenden Planrades 10.3 der Hypoidradverzahnung hat die Form einer Epizykloide bzw. sie ist von einer Epizykloide abgeleitet.

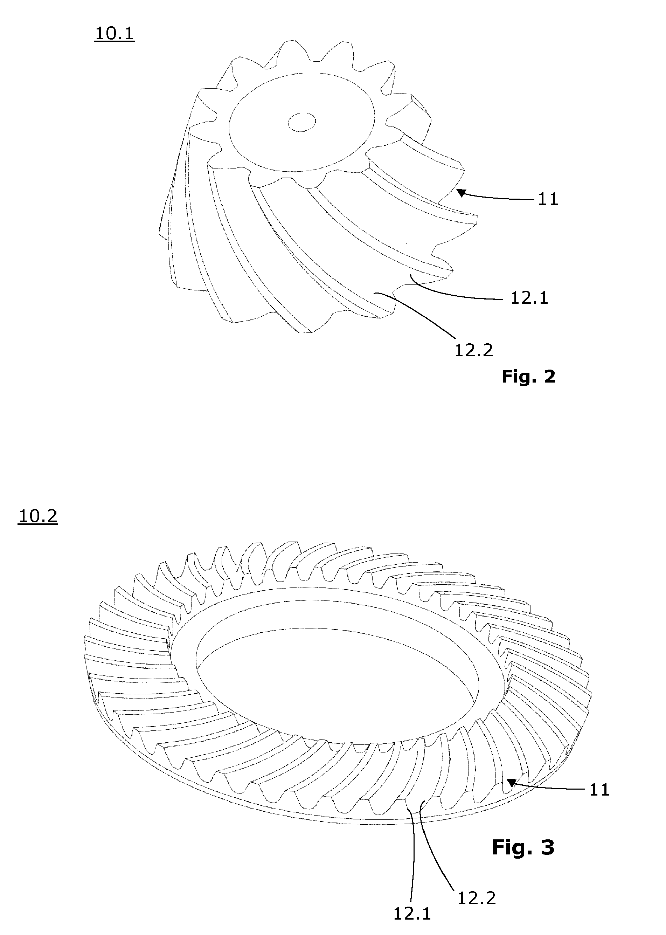

Wie den Figuren 1, 2, 3, sowie 5A - 5C zu entnehmen ist, geht es bei der Erfindung um Kegel- oder Hypoidräder 10, die eine Spiralverzahnung mit mindestens einer Zahnlücke 11 aufweisen. Diese mindestens eine Zahnlücke 11 ist durch Zahnflanken 12.1, 12.2 begrenzt. Die konvexen Zahnflanken sind in den Figuren mit 12.1 und die konkaven Zahnflanken mit 12.2 bezeichnet. Jede dieser Zahnflanken 12.1, 12.2 weist gemäß Erfindung eine Flankenlängslinie in Form einer Epizykloide auf. Außerdem hat die Zahnlücke 11 eine Zahnlückengrundweite e_{fn}, die konstant ist, wie bereits anhand der Fig. 1 erläutert wurde.

Gemäß Erfindung werden der Fußkegelwinkel und der Kopfkegelwinkel der Zahnräder 10 bewusst so gewählt oder ermittelt, dass die Zahnlückengrundweite e_{fn} im Normalschnitt konstant ist. Durch die Wahl oder das Ermitteln geeigneter Fußkegelwinkel und Kopfkegelwinkel erhält man ein Zahnrad 10, bei dem der Abstand der Epizykloiden der konkaven Flanke 12.2 und der konvexen Flanke 12.1 im Lückengrund der Zahnlücke 11 im Normalschnitt konstant ist. Diese Aussage gilt auch für verlängerte und verkürzte Epizykloiden.

Die Zahnlücke 11 der Zahnräder 10 sind durch Zähne definiert, die eine konische Zahnform aufweisen, wie man in den Figuren erkennen kann.

Die Zähne der erfindungsgemäßen Zahnräder 10 können eine Zahnhöhe Zh haben, die sich entlang der Zahnbreite ändert. Die Zahnhöhe Zh kann aber auch im Sonderfall konstant sein.

Gemäß Erfindung kann ein Verfahren zum spanabhebenden Fertigen mindestens einer Zahnlücke eines Kegelrad- oder Hypoidrad-Werkstücks zum Einsatz kommen, das im kontinuierlichen Teilungsverfahren ausgeführt wird.

Die Teilung erfolgt also kontinuierlich und alle Zahnlücken eines Zahnrads 10 werden quasi gleichzeitig erzeugt. Durch diese gekoppelten Bewegungen des Werkzeugs und des Werkstücks ergibt sich eine Epizykloide als Flankenlängslinie auf dem Planrad 10.3 des zu erzeugenden Zahnrads 10.

Die Erfindung lässt sich auch auf Kegel- oder Hypoidräder übertragen, deren Flankenlängslinie auf dem Planrad 10.3 des zu erzeugenden Zahnrads eine Hypozykloide ist.

Bezugszeichen

| | |
|---|---|
| Kegel- oder Hypoidrad | 10 |
| Kegel- oder Hypoidritzel | 10.1 |
| Kegel- oder Hypoidtellerrad | 10.2 |
| Erzeugendes Planrad | 10.3 |
| Zahnlücke | 11 |
| Zahnflanken | 12.1, 12.2 |
| | |
| Zahnlückengrundweite im Normalschnitt | e_{fn} |
| Zahnlückengrundweite im Stirnschnitt | e_{f} |
| Zahnlückenweite in Teilkegelebene | eₜ |
| Zahndicke | Zd |
| Zahnhöhe | Zh |

## Patentansprüche

1. Kegel- oder Hypoidrad (10) mit einer Spiralverzahnung, die mindestens eine Zahnlücke (11) aufweist, wobei
- die Zahnlücke (11) durch Zahnflanken (12.1, 12.2) begrenzt ist,
- jede der Zahnflanken (12.1, 12.2) eine Flankenlängslinie in Form einer Epizykloide aufweist, und
- die Zahnlücke (11) eine Zahnlückengrundweite (e_{fn}) hat, die konstant ist.

2. Kegel- oder Hypoidrad (10) nach Anspruch 1, **dadurch gekennzeichnet, dass** die Zahnlücke (11) durch Zähne definiert ist, die eine konische Zahnform aufweisen.

3. Kegel- oder Hypoidrad (10) nach Anspruch 2, **dadurch gekennzeichnet, dass** die Zähne einen Zahnhöhenverlauf haben, der so ermittelt wurde, dass ein Kegel- oder Hypoidritzel (10) mit einem Kegel- oder Hypoidtellerrad (10) gepaart werden kann.

4. Kegel- oder Hypoidrad (10) nach Anspruch 2, **dadurch gekennzeichnet, dass** die Zähne eine Zahnhöhe (Zh) haben, die sich entlang der Zahnbreite ändert.

5. Kegel- oder Hypoidrad (10) nach Anspruch 1 oder 2, **dadurch gekennzeichnet, dass** die Zahnlückengrundweite (e_{fn}) im Normalschnitt an unterschiedlichen Positionen der Zahnbreite gleich ist.
